Europäisches Patentamt

European Patent Office

Office européen des brevets

(19)

(11) Veröffentlichungsnummer: **0 312 678**
**A1**

## (12) EUROPÄISCHE PATENTANMELDUNG

(21) Anmeldenummer: 88102808.8

(51) Int. Cl.4: **H02K 5/15**

(22) Anmeldetag: 25.02.88

(30) Priorität: 17.10.87 DE 3735209

(43) Veröffentlichungstag der Anmeldung:
**26.04.89 Patentblatt 89/17**

(84) Benannte Vertragsstaaten:
**AT DE FR GB IT**

(71) Anmelder: **Halm, Richard**
**Silcherstrasse 54**
**D-7066 Baltmannsweiler(DE)**

(72) Erfinder: **Halm, Richard**
**Silcherstrasse 54**
**D-7066 Baltmannsweiler(DE)**

(74) Vertreter: **Patentanwälte Phys. Bartels**
**Dipl.-Ing. Fink Dr.-Ing. Held**
**Lange Strasse 51**
**D-7000 Stuttgart 1(DE)**

(54) **Elektromotor.**

(57) Ein Elektromotor, insbesondere Drehstrommotor mit Kurzschlußläufer hat ein gehäuseloses, eine im wesentlichen quadratische Außenkontur aufweisendes Statorblechpaket (2). Dieses ist nur in seinen Eckbereichen mit bezüglich der Längsmittelachse zylindrisch gekrümmten ersten Zentrierflächen versehen. Ein aus Metall bestehendes Lagerschild (14) weist vier in Umfangsrichtung um je 90° versetzt angeordnete Vorsprünge (18, 18') auf, welche in axialer Richtung über die an der Stirnseite des Statorblechpaketes (2) anliegende Anlagefläche (17) überstehen und eine an der ersten Zentrierfläche (20) anliegende, entsprechend dieser zylindrisch gekrümmte zweite Zentrierfläche (19) haben.

Fig.5

EP 0 312 678 A1

## Elektromotor

Die Erfindung betrifft einen Elektromotor, insbesondere Drehstromasynchronmotor mit Kurzschlußläufer, welcher die Merkmale des Oberbegriffs des Anspruches 1 aufweist.

Bei einem bekannten Motor dieser Art (DE-OS 32 07 952) ist nicht nur die Statorwicklung in Gießharz eingebettet, wodurch sich ein besserer Wärmeübergang von der Statorwicklung zum Statorblechpaket ergibt. Auch die beiden unmittelbar an das Statorblechpaket anschließenden Lagerschilde bestehen aus Gießharz. Bei derartigen Motoren ist jedoch die Befestigung eines Motorfußes und/oder eines Klemmenkastens schwierig. Außerdem wünschen die Anwender vielfach Lagerschilde aus Metall. Es wird deshalb in der nicht vorveröffentlichten europäischen Patentanmeldung 87 109 956.0 bereits vorgeschlagen, in den Eckbereichen des Statorblechpaktes außer Kanälen für die Befestigung wenigstens eines Motorfußes und/oder eines Klemmenkastens je einen zusätzlichen, durchgehenden Längskanal zur Aufnahme je eines Verbindungsbolzens vorzusehen, um mittels dieser Verbindungsbolzen Lagerschilde aus Metall mit dem Statorblechpaket verbinden zu können. Der Aufwand für die Zentrierung solcher Lagerschilde mit Hilfe von Paßstiften oder dgl. ist jedoch beträchtlich.

Der Erfindung liegt daher die Aufgabe zugrunde, einen Elektromotor der eingangs genannten Art dahingehend zu verbessern, daß die Zentrierung eines aus Metall bestehenden Lagerschildes einfach und kostengünstig ist. Diese Aufgabe löst ein Elektromotor mit den Merkmalen des Anspruches 1.

Die Anordnung der Zentrierflächen des Statorblechpaketes in dessen Eckbereichen erhöht den Aufwand nicht, da die die Zentrierflächen bildenden Partien beim Stanzvorgang entstehen. Aber auch der Aufwand für das Lagerschild erhöht sich durch die erfindungsgemäße Lösung praktisch nicht, weil die in Anlage an die Stirnfläche des Blechpaketes kommende Anlagefläche des Lagerschildes durch Drehen bearbeitet werden muß. Bei diesem Bearbeitungsvorgang, also bei ein und derselben Aufspannung, können auch die Zentrierflächen der Vorsprünge bearbeitet werden.

Bei einer bevorzugten Ausführungsform sind die Zentrierflächen des Statorblechpaketes durch Begrenzungsflächen von Kanälen gebildet, welche das Statorblechpaket in dessen Eckbereichen in Statorlängsrichtung durchdringen. Dies ergibt den Vorteil, daß die Vorsprünge des Lagerschildes in den Eckbereichen des Statorblechpaketes innerhalb von dessen Außenkontur liegen können. Da es in diesem Falle einfacher ist, die der Längsmittelachse zugekehrte Innenfläche der Vorsprünge zu bearbeiten, weil diese sich direkt an die Anlagefläche des Lagerschildes anschließen, sind die Zentrierflächen des Statorblechpaketes vorzugsweise durch die der Längsmittelachse des Statorblechpaketes am nächsten liegenden Begrenzungsflächen der Kanäle gebildet.

Es ist aber auch möglich, die äußere Begrenzungsfläche der Eckbereiche des Statorblechpaketes als Zentrierflächen auszubilden. Die Vorsprünge des Lagerschildes müssen dann diese Eckbereiche übergreifen.

Im folgenden ist die Erfindung anhand von zwei in der Zeichnung dargestellten Ausführungsbeispielen im einzelnen erläutert. Es zeigen.

Fig. 1 eine Stirnansicht eines ersten Ausführungsbeispiels,

Fig. 2 einen Schnitt nach der Linie II-II der Fig. 1,

Fig. 3 eine Draufsicht auf ein Blech des Statorblechpaketes,

Fig. 4 einen vergrößert dargestellten Ausschnitt aus Fig. 1,

Fig. 5 einen Schnitt nach der Linie V-V der Fig. 4,

Fig. 6 einen Schnitt entsprechend Fig. 5 eines zweiten Ausführungsbeispiels.

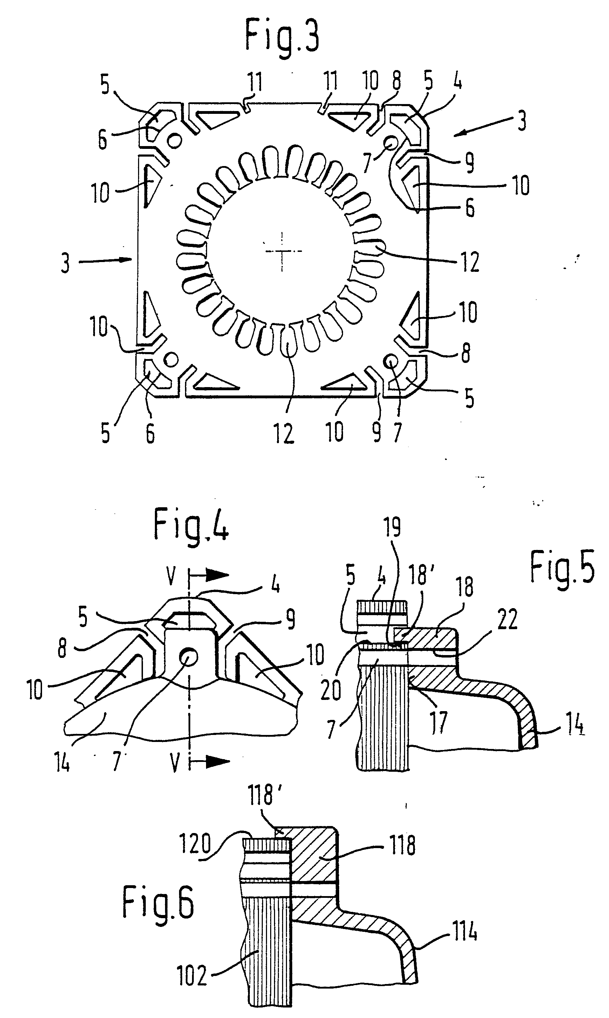

Ein Drehstromasynchronmotor mit einem Kurzschlußläufer 1 weist ein Statorblechpaket 2 auf, dessen Bleche 3, wie Fig. 3 zeigt, abgesehen von ihren abgerundeten Eckbereichen eine quadratische Außenkontur haben. Die äußere Begrenzungslinie 4 jedes Eckbereiches liegt auf einer allen vier Eckbereichen gemeinsamen, zur Längsmittelachse konzentrischen Kreislinie.

Wie Fig. 3 zeigt, sind die Eckbereiche des Bleches 3 mit mehreren Durchbrüchen versehen, welche beim Stanzen des Bleches hergestellt werden. Radial innerhalb der äußeren Begrenzungslinie 4 ist je ein trapezähnlicher Durchbruch 5 vorgesehen. Die innen, also der Längsachse am nächsten liegende Begrenzungslinie 6 liegt auf einem zur Längsachse konzentrischen, allen Begrenzungslinien 6 gemeinsamen Kreis. Radial innerhalb des trapezähnlichen Durchbruches 5 ist ein kreisförmiger Durchbruch 7 vorgesehen. Der trapezähnliche Durchbruch 5 und der kreisförmige Durchbruch 7 liegen zwischen zwei abgewinkelten Schlitzen 8 und 9. Diese beiden Schlitze 8 und 9 liegen wiederum zwischen zwei dreieckförmigen Durchbrüchen 10, wobei alle Durchbrüche und Schlitze symetrisch zu der Diagonalen desjenigen Eckbereiches ausgebildet und angeordnet sind, welcher die Durchbrüche enthält. Außerdem sind in einer der

2

vier Randzonen des Bleches 3 zusätzlich zwei kurze, schräge Schlitze 11 vorgesehen. In den Nuten 12 des Statorblechpaketes 2, das nicht in einem Gehäuse angeordnet ist, liegt die Statorwicklung, deren Wickelköpfe 13 über die beiden Stirnseiten des Statorblechpaketes 2 überstehen. Die Statorwicklung ist, soweit sie in den Nuten 12 liegt, im Ausführungsbeispiel in Gießharz eingebettet. Hierdurch wird der Wärmeübergang zum Statorblechpaket 2 verbessert und außerdem werden dessen Bleche 3 in Anlage aneinander gehalten. Die Wickelköpfe 13 werden von je einem aus Metall bestehenden Lagerschild 14 übergriffen. Die Lagerschilde 14 sind mit je einem Sitz für ein Wälzlager 15 versehen, in denen die den Kurzschlußläufer 1 tragende Motorwelle 16 drehbar gelagert ist.

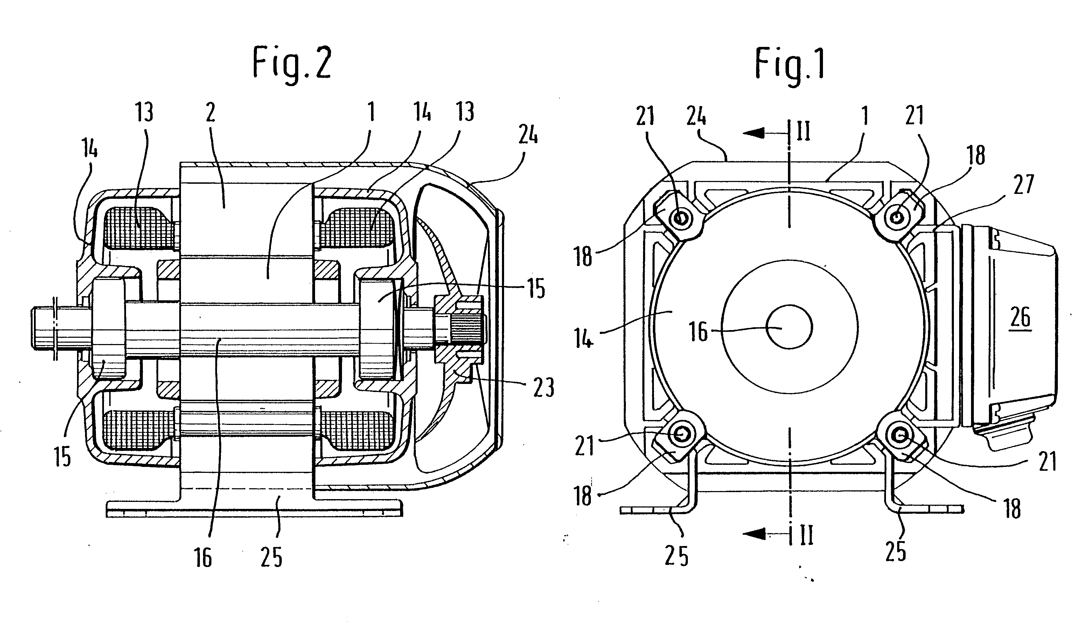

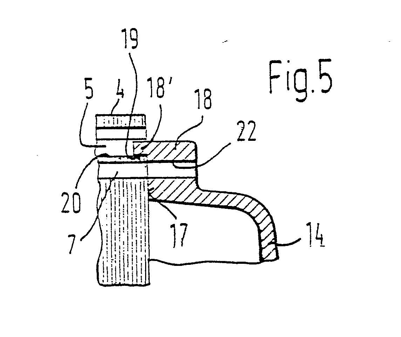

Wie inbesondere Fig. 5 zeigt, sind die beiden gleich ausgebildeten Lagerschilder 14 mit einer ebenen, ringscheibenförmigen Anlagefläche 17 versehen, mit der sie an der ihnen zugekehrten Stirnseite des Statorblechpaketes 2 anliegt. Wie insbesondere Fig. 1 zeigt, ist jedes Lagerschild 15 mit vier in Umfangsrichtung um je 90° versetzt angeordneten, angeformten Vorsprüngen 18 versehen, welche sich in radialer Richtung über die Anlagefläche 17 hinaus erstrecken, jedoch innerhalb der Außenkontur des Statorblechpaketes 2 enden. Diese Vorsprünge 18 haben, wie Fig. 5 zeigt, eine gegen das Statorblechpaket 2 hin vorspringende Nase 18', deren Lage und Größe so gewählt ist, daß sie in den trapezähnlichen Durchbruch 5 einzugreifen vermag. Bei der Bearbeitung der Anlagefläche 17 des Lagerschildes 14 wird auch die dem Statorblechpaket 2 zugekehrte Seite der Vorsprünge 14 bearbeitet, und zwar derart, daß diese Fläche mit der Anlagefläche 17 fluchtet. Außerdem wird die der Motorwelle 16 zugekehrte Innenfläche der Nase 18' derart bearbeitet, daß sie eine Zentrierfläche 19 bildet, welche an der durch die innere Begrenzung der trapezähnlichen Durchbrüche 5 gebildeten Zentrierfläche 20 anliegt. Das Lagerschild 14 wird also durch die Zentrierfläche 19 der vier in die Durchbrüche 5 eingreifenden Nasen 18' zentriert.

Vier Spannbolzen 21, welche Bohrungen 22 in den Vorsprüngen 18 sowie die Durchbrüche 7 das Statorblechpaket durchdringen, spannen die beiden Lagerschilde 14 gegen das Statorblechpaket.

Auf das eine Ende der Motorwelle 16 ist ein Lüfterrad 23 aufgesetzt, das von einer Lüfterhaube 24 abgedeckt wird, welche das eine Lagerschild 14 und das Statorblechpaket 2 übergreift, wobei die Zentrierung durch eine Anlage an der Außenfläche der Eckbereiche erfolgt.

Die Füße 25 des Rotors sind durch je eine Profilschiene gebildet, welche in die abgewinkelten Schlitze 8 und 9 an der Unterseite des Statorblechpaketes 2 eingreifen und hier festgelegt sind. Ein Klemmenkasten 26 wird von einem Blechbügel 27 getragen, dessen Schenkel in die abgewickelten Schlitze 8 und 9 der einen Seite des Statorblechpaketes 2 eingreifen und in diesen festgelegt sind. Die übrigen Durchbrüche vergrößern die wärmeabgebende Fläche des Statorblechpaketes 2 und bilden Kühlkanäle für den Durchtritt der vom Lüfterrad 23 geförderten Luft.

Wie Fig. 6 zeigt, kann man die Vorsprünge 118 der Lagerschilde 114 in radialer Richtung auch über die äußere Begrenzungslinie der Eckbereiche des Statorblechpaketes 102 überstehen lassen. Die Nase 118' kann dann den Eckbereich des Statorblechpaketes 102 übergreifen und mit ihrer innenliegenden Zentrierfläche an der den Eckbereich nach außen begrenzenden Zentrierfläche 120 des Statorblechpaketes 102 anliegen.

Alle in der vorstehenden Beschreibung erwähnten sowie auch die nur allein aus der Zeichnung entnehmbaren Merkmale sind als weitere Ausgestaltungen Bestandteile der Erfindung, auch wenn sie nicht besonders hervorgehoben und insbesondere nicht in den Ansprüchen erwähnt sind.

## Ansprüche

1. Elektromotor, insbesondere Drehstrommotor mit einem Kurzschlußläufer, mit einem gehäuselosen, eine im wesentlichen quadratische Außenkontur aufweisenden Statorblechpaket und wenigstens einem gegenüber diesem zentrierten und mit diesem verbundenen Lagerschild aus Metall, dadurch **gekennzeichnet,** daß

a) das Statorblechpaket (2; 102) nur in seinen Eckbereichen mit bezüglich der Längsmittelachse zylindrisch gekrümmten ersten Zentrierflächen (20; 120) versehen ist,

b) das Lagerschild (14; 114) vier in Umfangsrichtung um je 90° versetzt angeordnete Vorsprünge (18, 18'; 118, 118') aufweist, welche in axialer Richtung über die an der Stirnseite des Statorblechpaketes (2; 102) anliegende Anlagefläche (17) überstehen und eine an der ersten Zentrierfläche (20; 120) anliegende, entsprechend dieser zylindrisch gekrümmte zweite Zentrierfläche (19) haben.

2. Elektromotor nach Anspruch 1, dadurch **gekennzeichnet,** daß die ersten Zentrierflächen (20; 120) durch die Begrenzungsflächen von Kanälen (5) gebildet sind, welche das Statorblechpaket (2; 102) in dessen Eckbereichen in Statorlängsrichtung durchdringen.

3. Elektromotor nach Anspruch 2, dadurch **gekennzeichnet,** daß die der Längsmittelachse des Statorblechpaketes (2) am nächsten liegende Begrenzungsfläche der Kanäle (5) als Zentrierfläche ausgebildet ist, die Vorsprünge (18, 18') in diese Kanäle (5) eingreifen und die zweite Zentrierfläche (19) auf der der Längsmittelachse zugekehrten Seite der Vorsprünge (18, 18') vorgesehen sind.

4. Elektromotor nach Anspruch 1, dadurch **gekennzeichnet,** daß die vier Eckbereiche der das Statorblechpaket (102) bildenden Bleche zur Bildung der ersten Zentrierfläche (120) eine kreisbogenförmig gekrümmte Kontur haben und in einer gemeinsamen, zur Längsmittelachse gleichachsigen Zylinderfläche liegen, und daß die mit ihrer Innenseite die zweite Zentrierfläche bildenden Vorsprünge (118, 118') die Eckbereiche des Statorblechpaketes (102) übergreifen und an dessen erster Zentrierfläche (120) anliegen.

5. Elektromotor nach einem der Ansprüche 1 bis 4, dadurch **gekennzeichnet,** daß die das Statorblechpaket (2; 102) bildenden Fläche (3) in ihren Eckbereichen mindestens je einen zusätzlichen Durchbruch (7 bis 11) aufweisen.

Fig.1

Fig.2

# Fig.3

# Fig.4

# Fig.5

# Fig.6

Fig.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-1 488 490 (EMERSON ELECTRIC CO.) * Seite 4, Zeile 18 - Seite 5, Zeile 6; Seite 6, Zeilen 5 - 10; Figuren 1 - 9 * --- | 1 - 3 | H 02 K 5/15 |
| A | DE-A- 969 387 (C. LORENZ AG) * Seite 2, Zeilen 59 - 69; Figuren * --- | 1, 4, 5 | |
| A | WO-A-8 505 232 (J. WORKMAN) * Seite 5, Zeilen 17 - 29; Figuren 5A - 5B * --- | 1, 4 | |
| P,D A | EP-A-0 254 930 (R. HALM) * Spalte 5, Zeilen 16 - 23 u. 37 - 57; Figuren 3, 4 * --- | 1 | |
| A | DE-U-1 920 447 (GESELLSCHAFT FUER ELEKTRISCHE GERAETE) * Seite 6, Zeilen 2 - 5; Figuren 1 - 4 * ------ | 1 | |

|  |
|---|
| **RECHERCHIERTE SACHGEBIETE (Int. Cl.4)** |
| H 02 K 5/00 |

Der vorliegende Recherchenbericht wurde für alle Patentansprüche erstellt

| Recherchenort | Abschlußdatum der Recherche | Prüfer |
|---|---|---|
| BERLIN | 11-01-1989 | LEOUFFRE M. |